# EUROPÄISCHE PATENTSCHRIFT

(11) **EP 3 198 170 B1**
(45) Veröffentlichungstag und Bekanntmachung des Hinweises auf die Patenterteilung: **12.02.2020**
(21) Anmeldenummer: 15771074.0
(22) Anmeldetag: 24.09.2015
(51) Int. Cl.: F16H 3/089, F16H 3/08

(54) **SCHALTGETRIEBE FÜR EIN KRAFTFAHRZEUG**
TRANSMISSION FOR A MOTOR VEHICLE
BOÎTE DE VITESSES DESTINÉE À UN VÉHICULE AUTOMOBILE

(30) Priorität: 26.09.2014 DE 102014114006
(43) Veröffentlichungstag der Anmeldung: 02.08.2017
(73) Patentinhaber: Getrag Ford Transmissions GmbH, 50735 Köln (DE)
(72) Erfinder: ROGALSKI, Sebastian, 51109 Köln (DE); PASCHLEBEN, Kerstin I., 50189 Elsdorf (DE); SCHELLENBERGER, Frank, 45138 Essen (DE); STRAHL, Michael, 50259 Pulheim (DE); HAUG, Markus, 51427 Bergisch Gladbach (DE)
(74) Vertreter: Wagner Albiger & Partner Patentanwälte mbB
(86) Internationale Anmeldenummer: PCT/EP2015/071966
(87) Internationale Veröffentlichungsnummer: WO 2016/046313

(56) Entgegenhaltungen:
- DE-A1- 10 145 790
- JP-A- 2004 176 844
- JP-A- 2010 203 605

## Beschreibung

Die Erfindung betrifft ein Schaltgetriebe für ein Kraftfahrzeug, das eine Eingangswelle, eine Ausgangswelle sowie Festräder, Losräder und Gangschaltkupplungen zur drehfesten Verbindung der Losräder mit der Eingangswelle oder der Ausgangswelle umfasst.

Ein derartiges Schaltgetriebe ist beispielsweise aus der EP 0 560 202 B1 bekannt. Das Schaltgetriebe weist sechs Vorwärtsgänge und einen Rückwärtsgang auf. Jedem Gang kann dabei ein Losrad und eine Gangschaltkupplung zugeordnet werden, wobei das Losrad durch die Gangschaltkupplung drehfest mit der das Losrad tragenden Welle verbunden ist, wenn der entsprechende Gang eingelegt ist. Beispielsweise kämmt bei einem Ausführungsbeispiel der EP 0 560 202 B1 ein auf der Ausgangswelle angeordnetes Losrad eines ersten Vorwärtsgang mit einem Festrad auf der Eingangswelle. Die dem ersten Gang (erste Vorwärtsgang) zugeordnete Gangschaltkupplung ist Teil einer Doppelgangschaltkupplung, mit der auch ein Losrad eines zweiten Vorwärtsgang drehfest mit der Ausgangswelle verbunden werden kann.

Ist die Eingangswelle über eine Kupplung mit einem Antrieb verbunden, so wird im Schaltgetriebe bei eingelegtem ersten Vorwärtsgang das Drehmoment von der Eingangswelle über die Zahnradpaarung Festrad / Losrad des ersten Vorwärtsgangs auf die Ausgangswelle übertragen. An einem Ende der Ausgangswelle sitzt drehfest ein erstes Ritzel, das mit einem Ringrad eines Abtriebs (hier ein Differenzial) kämmt. Somit ist eine geschlossene Drehmomentkette zwischen Antrieb und Abtrieb gegeben.

Zur Realisierung eines Rückwärtsgangs weist das Schaltgetriebe der EP 0 560 202 B1 eine Zusatzwelle mit einem darauf sitzenden zweiten Ritzel auf, das ebenfalls mit dem Ringrad kämmt. Auf der Zusatzwelle sind zudem ein Zusatzzahnrad und eine Zusatz-Gangschaltkupplung angeordnet. Die Zusatz-Gangschaltkupplung weist dabei eine Schiebemuffe auf, die sich axial verschieben lässt. Die Schiebemuffe sorgt bei eingelegtem Rückwärtsgang für eine drehfeste Verbindung zwischen dem Zusatzzahnrad und dem zweiten Ritzel. Das Zusatzzahnrad der Zusatzwelle kann daher auch als Losrad des Rückwärtsgangs bezeichnet werden. Da das Zusatzzahnrad über das Losrad des ersten Ganges angetrieben wird, kann das Losrad des ersten Ganges als Zwischenrad angesehen werden, durch das die erforderliche Drehrichtungsumkehr gegenüber dem ersten Gang erreicht wird.

Die JP 2004-176844 offenbart ein Schaltgetriebe, wobei zur Bildung des Rückwärtsgangs ebenfalls das Zusatzzahnrad und das mit dem Ringrad kämmende zweite Ritzel vorgesehen sind. Die Schiebemuffe der Zusatz-Gangschaltkupplung ist dabei axial verschiebbar, aber drehfest auf einer Nabe angeordnet, die wiederum drehfest mit dem zweiten Ritzel verbunden ist. Bei eingelegtem Rückwärtsgang stellt die Schiebemuffe eine drehfeste Verbindung zwischen dem zweiten Ritzel und dem Zusatzzahnrad her.

Die JP 2010-203605 A offenbart ein Schaltgetriebe gemäß dem Oberbegriff von Anspruch 1. Auf der Zusatzwelle ist noch eine weitere Schiebemuffe zur Realisierung von weiteren Vorwärtsgängen vorgesehen.

Bei der Schaltgetriebe der DE 101 45 790 A1 lässt sich über eine Schaltmuffe ein mit dem Ringrad kämmendes Ritzel mit der Zusatzwelle drehfest verbinden bzw. wieder lösen. Bei eingelegtem Rückwärtsgang verläuft der Drehmomentfluss von der Eingangswelle des Schaltgetriebes über eine gesonderte Zwischenwelle, die keine direkte Anbindung an das Ringrad aufweist.

Im Betrieb des Schaltgetriebes kann es zu unerwünschtes Rasselgeräuschen kommen. Durch Torsionsschwingungen insbesondere induziert durch den Antrieb können Zahnflanken von lastfreien Zahnrädern, die miteinander kämmen, innerhalb des gegebenen Zahnflankenspiels aneinander anschlagen, was zu den unerwünschten Rasselgeräuschen führt. Ist beispielsweise der erste Vorwärtsgang eingelegt, so läuft das lastfreie Losrad des Rückwärtsgangs aufgrund des gegebenen kämmenden Eingriffs mit dem Losrad des ersten Vorwärtsgangs mit und kann die besagten Rasselgeräusche (mit-)verursachen.

Der Erfindung liegt die Aufgabe zu Grunde, ein Schaltgetriebe gemäß dem Oberbegriff von Anspruch 1 so weiterzuentwickeln, dass Rasselgeräusche möglichst vermieden bzw. klein gehalten werden. Das Schaltgetriebe sollte zudem möglichst einfach und kompakt aufgebaut sein.

Die der Erfindung zu Grunde liegende Aufgabe wird mit einem Schaltgetriebe gemäß Anspruch 1 gelöst. Ausführungsbeispiele der Erfindung können den Unteransprüchen entnommen werden.

Beim erfindungsgemäßen Schaltgetriebe ist das zweite Ritzel bei nicht eingelegtem Zusatzgang drehbar auf der Zusatzwelle angeordnet und bei eingelegtem Zusatzgang mit der Zusatzwelle drehfest verbunden. Somit besteht bei nicht eingelegtem Zusatzgang eine Entkopplung zwischen der Zusatzwelle und dem zweiten Ritzel. Aufgrund des kämmenden Eingriffs mit dem Ringrad dreht sich das zweite Ritzel immer dann, wenn das Kraftfahrzeug in Bewegung ist. Bei Torsionsschwingungen, die über den Anregungspfad des Ringrads zur Zusatzwelle gelangen, führt die entsprechende Entkopplung der Zusatzwelle von dem zweiten Ritzel zu einem kleineren Trägheitsmoment des Schwingungssystems, das über diesen Anregungspfad angeregt werden kann. Die Idee der Erfindung besteht also darin, gezielt Einfluss zu nehmen auf die rotierende Masse bzw. das Trägheitsmoment des rotierenden Systems, das über die Anregung des Ringrads in Schwingungen versetzt werden kann und dabei unerwünschte Rasselgeräusche erzeugt.

Erfindungsgemäß lässt sich die Schiebemuffe bei nicht eingelegtem Zusatzgang zum zweiten Ritzel verdrehen. Bei eingelegtem Zusatzgang hingegen ist die Schiebemuffe mit dem zweiten Ritzel drehfest verbunden. Insbesondere die Schiebemuffe trägt zum Trägheitsmoment des oben erwähnten rotierenden, über das Ringrad anregbaren Systems bei, weil bei der Schiebemuffe die rotierende Masse bei relativ großem Durchmesser anfällt.

Das Zusatzzahnrad sitzt als Festrad auf der Zusatzwelle. Entsprechend ist das Zusatzzahnrad einstückig mit der Zusatzwelle ausgebildet. Alternativ sind Zusatzzahnrad und Zusatzwelle separate Bauteile, die - unabhängig von jeglichen Schaltzuständen im Getriebe - drehfest miteinander verbunden sind.

Die Schiebemuffe kann drehfest mit dem Zusatzzahnrad verbunden sein. In diesem Fall würde die Schiebemuffe zum Trägheitsmoment des Schwingungssystems beitragen, dem auch das Zusatzzahnrad angehört. Auch dieses Schwingungssystem kann zu Rasselgeräuschen führen, doch hat sich gezeigt, dass eine schwingungstechnische Entkopplung von zweitem Ritzel und zumindest der Schiebemuffe insgesamt zu besseren Ergebnissen hinsichtlich Rasseln führt.

Erfindungsgemäß ist der Zusatzgang als Rückwärtsgang ausgebildet. Das Zusatzzahnrad kämmt mit einem Losrad auf der Ausgangswelle. Das mit dem Zusatzzahnrad kämmende Losrad ist dem ersten Vorwärtsgang des Schaltgetriebes zugeordnet. Eine andere erfindungsgemäße Möglichkeit besteht darin, dass das Zusatzzahnrad mit einem Losrad eines zweiten Vorwärtsgangs kämmt. Das Losrad des ersten Vorwärtsgangs kann mit einem Festrad auf der Eingangswelle kämmen, das vorzugsweise einstückig mit der Eingangswelle ausgebildet ist. Alternativ oder zusätzlich kann das Losrad des zweiten Vorwärtsgangs mit einem (weiteren) auf der Eingangswelle angeordneten Festrad auf der Eingangswelle kämmen, wobei auch hier das Festrad einstückig mit der Eingangswelle ausgebildet sein kann.

In einem nicht beanspruchten Ausführungsbeispiel kann der Zusatzgang alternativ auch als Vorwärtsgang ausgebildet sein. Beispielsweise ist es denkbar, den Zusatzgang als sogenannten Kriechgang mit einer sehr hohen Übersetzung auszubilden. In diesem Fall bedarf es keiner Maßnahmen zur Drehrichtungsumkehr gegenüber den übrigen Vorwärtsgängen des Schaltgetriebes. Sollte bei dem Ausführungsbeispiel des Kriechgangs der Antrieb des Zusatzzahnrads auch über ein Losrad eines Vorwärtsgangs erfolgen, wäre dann aber noch ein Zwischenrad notwendig.

Das Schaltgetriebe kann als Doppelkupplungsgetriebe ausgebildet sein, welches neben der Eingangswelle eine weitere Eingangswelle aufweist. Vorzugsweise sind die Eingangswellen zueinander koaxial angeordnet, wobei eine der Eingangswellen als Hohlwelle und die andere als Vollwelle ausgebildet sein kann.

Auch kann das Schaltgetriebe eine weitere Ausgangswelle aufweisen, auf der ein weiteres Ritzel angeordnet ist, das ebenfalls mit dem Ringrad kämmt. In der Ausführung von zwei Ausgangswellen würde somit das Ringrad mit drei Ritzeln kämmen, nämlich mit den Ritzeln der beiden Ausgangswellen sowie mit dem zweiten Ritzel auf der Zusatzwelle.

In einem Ausführungsbeispiel sind die Schiebemuffe an einer axialen Seite des zweiten Ritzels und das Zusatzzahnrad an einer gegenüber liegenden axialen Seite des zweiten Ritzels angeordnet. Von einer Antriebs- oder Motorseite des Schaltgetriebes her gesehen kann sich somit in axialer Richtung der Zusatzwelle folgende Reihenfolge ergeben: Schiebemuffe, zweites Ritzel, Zusatzzahnrad. Somit ist das zweite Ritzel zwischen Schiebemuffe und Zusatzzahnrad angeordnet, wobei es bei der Beurteilung der relativen Lage der Bauteile zueinander auf die jeweilige Außenverzahnung von Ritzel und Zusatzzahnrad ankommen soll.

Alternativ zur Ausführung, bei der das zweite Ritzel zwischen Zusatzzahnrad und Schiebemuffe sitzt, können Schiebemuffe und Zusatzzahnrad an einer gleichen axialen Seite des zweiten Ritzels angeordnet sein.

Insbesondere, wenn das zweite Ritzel zwischen Zusatzzahnrad und Schiebemuffe angeordnet ist, kann eine Nabe vorgesehen sein. Vorzugsweise ist diese Nabe über eine Kerbverzahnung mit der Zusatzwelle drehfest verbunden. Die Schiebemuffe umfasst in radialer Richtung diese Nabe, wobei zwischen Schiebemuffe und Nabe ebenfalls Mittel vorgesehen sind, durch die eine drehfeste Verbindung zwischen Nabe und Schiebemuffe sichergestellt wird. Gegenüber der Nabe ist jedoch die Schiebemuffe axial verschiebbar.

Die Schiebemuffe kann an einem Radialsteg des Zusatzzahnrads angeordnet sein. Der Radialsteg des Zusatzzahnrads überbrückt dabei den radialen Abstand zwischen der Außenverzahnung des Zusatzzahnrads und der Zahnradachse, um die sich das Zusatzzahnrad dreht. Die Anordnung der Schiebemuffe an dem Radialsteg des Zusatzzahnrads stellt eine mögliche Ausführung dar, wenn Zusatzzahnrad und Schiebemuffe an einer gleichen Seite des zweiten Ritzels angeordnet sind.

Eine drehbare Lagerung zwischen dem zweiten Ritzel und der Schiebemuffe der Zusatz-Gangschaltkupplung kann ein Nadellager umfassen. Beispielsweise kann das Nadellager zwischen dem zweiten Ritzel und der Zusatzwelle angeordnet sein, wobei dann das Zusatzzahnrad als Festrad drehfest auf der Zusatzwelle sitzt.

An dem zweiten Ritzel kann drehfest ein Kupplungsring befestigt sein. Eine bevorzugte Befestigung stellt hierbei das Laserschweißen dar.

In einem Ausführungsbeispiel entspricht eine Breite der Außenverzahnung im Wesentlichen der Gesamtbreite des zweiten Ritzels. Das zweite Ritzel kann dabei einen kleinen axialen Ansatz aufweisen, der zur drehfesten Befestigung des Kupplungsrings dient. Insbesondere weist das zweite Ritzel darüber hinaus keine axial sich erstreckenden Flächen zur drehbaren Lagerung weiterer Bauteil auf.

Anhand der in den Figuren dargestellten Ausführungsbeispiele wird die Erfindung näher erläutert. Es zeigen:
- Figur 1: schematisch ein erfindungsgemäßes Schaltgetriebe im Längsschnitt;
- Figur 2: eine erste Ausführung der Anordnung von einer Schiebemuffe und einem zweiten Ritzel auf einer Zusatzwelle; und
- Figur 3: eine zweite Ausführung der Anordnung von Schiebemuffe und zweitem Ritzel auf der Zusatzwelle;

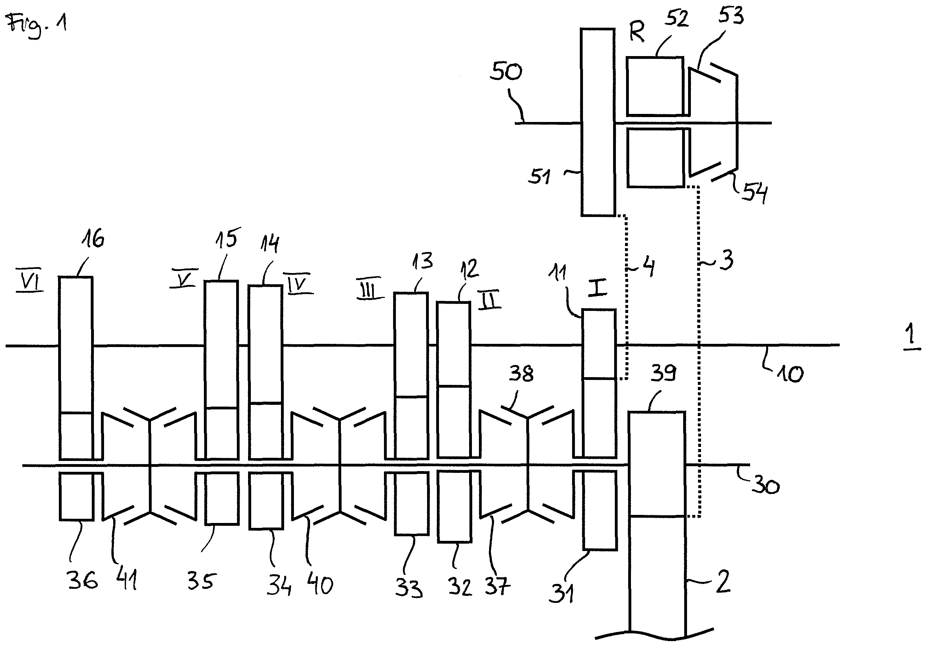

Figur 1 zeigt schematisch den Radsatz eines Schaltgetriebes für Kraftfahrzeuge. Das Schaltgetriebe weist eine Eingangswelle 10 auf, die sich an einer Antriebs- oder Motorseite 1 mit einem hier nicht dargestellten Antrieb oder Motor des Kraftfahrzeugs vorzugsweise über eine Kupplung verbinden lässt.

Parallel zur Eingangswelle 10 ist eine Ausgangswelle 30 angeordnet. Des Weiteren weist das Schaltgetriebe eine Zusatzwelle 50 auf, die ebenfalls parallel zur Eingangswelle 10 angeordnet ist.

Auf der Eingangswelle 10 sind sechs Festräder 11, 12, 13, 14, 15 und 16 angeordnet. Das Festrad 11 kämmt dabei mit einem Losrad 31, welches auf der ersten Ausgangswelle 30 angeordnet ist. Auf der Ausgangswelle 30 sitzen weitere Losräder, nämlich Losräder 32, 33, 34, 35 und 36. Das Losrad 31 lässt sich über eine als Doppel-Gangschaltkupplung ausgebildete Gangschaltkupplung 37 drehfest mit der Ausgangswelle 30 verbinden. Die Doppel-Gangschaltkupplung 37 weist dabei eine Schiebemuffe 38 auf, die sich ausgehend von einer Neutralposition entlang der Ausgangswelle 30 in Richtung des Losrads 31 und in Richtung des Losrads 32 axial bewegen lässt. Wird die Schiebemuffe 38 in Richtung des Losrads 31 verschoben, lässt sich dadurch eine drehfeste Verbindung zwischen Losrad 31 und Ausgangswelle 30 herstellen. Das Losrad 31 ist dabei einem ersten Vorwärtsgang I des Schaltgetriebes zugeordnet. Durch Betätigung der Schiebemuffe 38 lässt sich somit der erste (Vorwärts-)Gang I einlegen. Das Drehmoment des Motors führt dabei über die Eingangswelle 10 und die Zahnradpaarung der Zahnräder 11, 31 auf die Ausgangswelle 30, auf der drehfest ein erstes Ritzel 39 sitzt. Das erste Ritzel 39 steht dabei im kämmenden Eingriff mit einem nur teilsweise dargestellten Ringrads 2 eines Abtriebs (nicht dargestellt).

Mit einer axialen Verschiebung der Schiebemuffe 38 von der Neutralstellung in Richtung des Losrads 32 lässt sich ein zweiter Gang II des Schaltgetriebes einlegen. Bei eingelegtem zweiten Gang II erfolgt der Drehmomentfluss dann vom Motor über das Festrad 12 und das damit kämmende Losrad 32 auf die Ausgangswelle 30.

Zwischen den Rädern 33, 34 ist eine weitere Doppel-Gangschaltkupplung 40 angeordnet, durch die sich, in analoger Weise wie bei der Doppel-Gangschaltkupplung 37, ein dritter Vorwärtsgang III und einen vierter Vorwärtsgang IV einlegen lässt. Ebenfalls auf der Ausgangswelle 30 sitzt eine weitere Doppel-Gangschaltkupplung 41, durch die entweder das Losrad 35, das einem fünften Vorwärtsgang V zugeordnet ist, oder das Losrad 36, dass einem sechsten Vorwärtsgang VI zugeordnet ist, drehfest mit der Ausgangswelle 30 verbunden werden kann. Bedingt durch die Lage der Lösräder 31 bis 36, die alle auf der Ausgangswelle 30 sitzen, befinden sich auch die Doppel-Gangschaltkupplungen 37, 40 und 41 allesamt auf der Ausgangswelle 30. Bei einer alternativen Ausführung könnten auch einige der Lösräder auf der Eingangswelle 10 angeordnet sein, was dann auch eine entsprechende Anordnung von Gangsschaltkupplungen auf der Eingangswelle zu Folge hätte.

Auf der Zusatzwelle 50 sind ein Zusatzzahnrad 51, ein zweites Ritzel 52 und eine als Einfach-Gangschaltkupplung ausgebildete Zusatzgangschaltkupplung 53 (kurz: Gangschaltkupplung 53) angeordnet. Die Gangschaltkupplung 53 weist eine Schiebemuffe 54 auf, die in Neutralposition und eine Schaltposition einnehmen kann. In Schaltposition sorgt sie für eine drehfeste Verbindung zwischen dem zweiten Ritzel 52 und dem Zusatzzahnrad 51. Das zweite Ritzel 52 kämmt wie das erste Ritzel 39 mit dem Ringrad 2. Dieser kämmende Eingriff ist durch die gepunktete Linie 3 dargestellt.

Das Zusatzzahnrad 51 kämmt mit dem Losrad 31 des ersten Vorwärtsgangs I (siehe gestrichelte Linie 4). Das zweite Ritzel 52 kann als Losrad eines Rückwärtsgangs R des Schaltgetriebes aufgefasst werden. Ist der Rückwärtsgang R eingelegt (oder befindet sich die Schiebemuffe 54 in Schaltposition), so verläuft der Drehmomentfluss vom Motor über die Zahnräder 11, 31 zum Zusatzzahnrad 51. Da das zweite Ritzel 52 bei eingelegtem Rückwärtsgang R drehfest mit dem Zusatzzahnrad 51 verbunden ist, wird das Drehmoment vom Motor auf das Ringrad 2 und somit auf den Abtrieb übertragen.

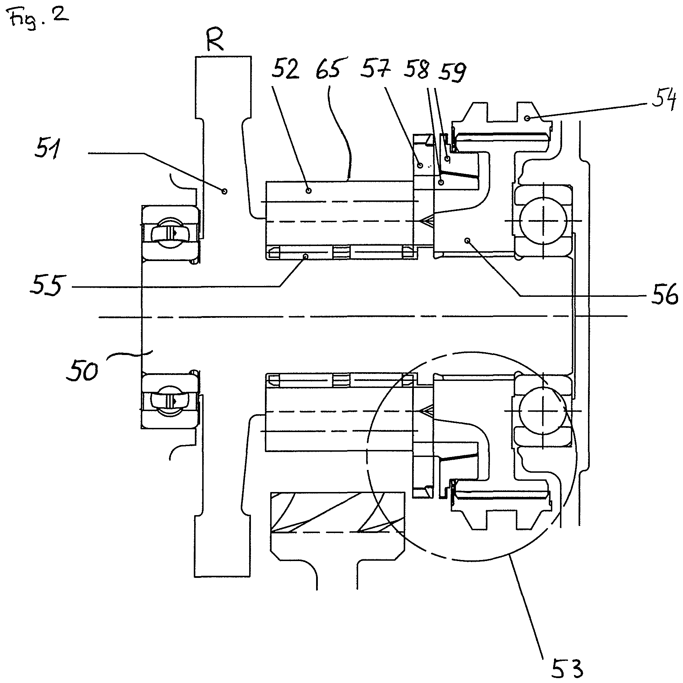

Figur 2 zeigt eine erste Ausführung der Anordnung von der Schiebemuffe 54 und dem zweiten Ritzel 52 auf der Zusatzwelle 50. In Figur 2 werden Bauteile oder Merkmale, die zu Bauteilen oder Merkmalen der Figur 1 ähnlich sind, mit gleichen Bezugszeichen bezeichnet. Sinngemäß gilt das auch für die übrigen Figuren.

Die Zusatzwelle 50 und das Zusatzzahnrad 51 sind hier einstückig ausgebildet. Das zweite Ritzel 52 ist in axialer Richtung der Zusatzwelle 50 gesehen zwischen dem Zusatzzahnrad 51 und der Schiebemuffe 54 angeordnet. In radialer Richtung gesehen ist zwischen der Zusatzwelle 50 und dem zweiten Ritzel 52 ein Nadellager 55 vorgesehen. Eine drehfeste Verbindung zwischen der Schiebemuffe 54 und der Zusatzwelle 50 erfolgt über eine Nabe 56. An dem zweiten Ritzel 52 ist ein Kupplungsring 57 drehfest befestigt, der eine konische Anlauffläche 58 aufweist. Diese konische Anlauffläche 58 wirkt mit einem Synchronring 59 zusammen. Beim Einlegen des Rückwärtsgangs R wird die Schiebemuffe 54, die in Figur 2 in ihrer Neutralposition dargestellt ist, in Richtung des Kupplungsrings 57 verschoben. Dabei wird der Synchronring 59 gegen die Anlauffläche 58 gedrückt. Durch das Zusammenwirken von Synchronring 59 und Anlauffläche 58 wird das zweite Ritzel 52 auf die Drehzahl der Zusatzwelle 50 gebracht. Ist eine Synchronisation der Drehzahlen von Zusatzwelle 50 und zweitem Ritzel erreicht, lässt sich die Schiebemuffe 54 über die Außenverzahnung des Synchronrings 59 und die Außenverzahnung des Kupplungsring 57 in die Schaltposition schieben. Dadurch wird eine drehfeste Verbindung zwischen Kupplungsring 57 und der Nabe 56 erzeugt.

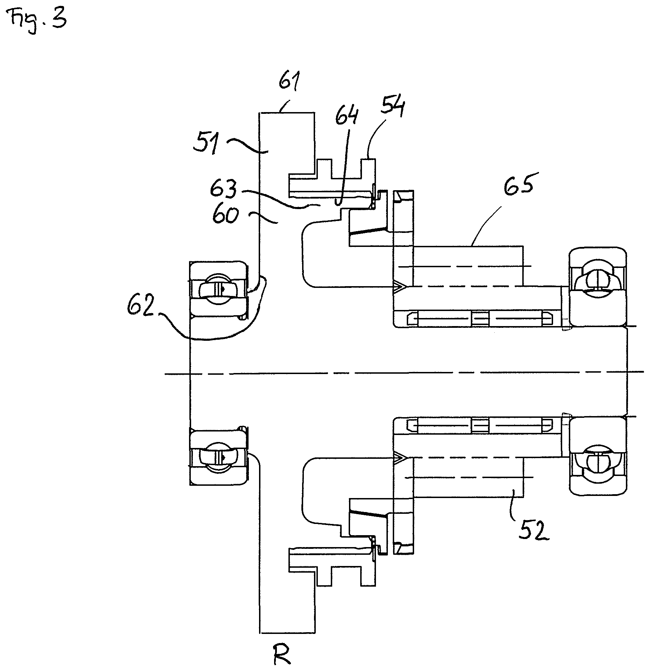

Figur 3 zeigt eine zweite Ausführung der Anordnung von Schiebemuffe 54 und zweitem Ritzel 52. Im Gegensatz zum Ausführungsbeispiel der Figur 2 sind Schiebemuffe 54 und Zusatzzahnrad 51 an einer gleichen axialen Seite des zweiten Ritzel 52 angeordnet. Sowohl das Zusatzzahnrad 51 als auch die Schiebemuffe 54 befinden sich an einer der Motorseite 1 abgewandten Seite des zweiten Ritzels 52.

Ein Radialsteg, der den radialen Abstand zwischen einer Außenverzahnung 61 des Zusatzzahnrads 51 und eines Zahnfußes 62 überbrückt, umfasst einen axialen Vorsprung 63, der sich zur Motorseite 1 hin erstreckt. In den Vorsprung 63 ist eine Außenverzahnung 64 eingearbeitet ist. Diese Außenverzahnung 64 bildet mit einer Innenverzahnung der Schiebemuffe 54 eine Kerbzahnverbindung, die für eine drehfeste Verbindung von Schiebemuffe 54 und Zusatzzahnrad 51 sorgt. Die Schiebemuffe 54 lässt sich aber von der in Figur 3 dargestellten Position nach rechts (zur Motorseite) verschieben, um den Rückwärtsgang R einzulegen.

Das zweite Ritzel 52 und der Kupplungsring 57 bilden eine Einheit, dessen axiale Breite durch die Außenverzahnung 65 des Ritzels 52 und die axiale Erstreckung des Kupplungsrings 57 mit seiner Anlauffläche 58 bestimmt ist. An der dem Kupplungsring abgewandten axialen Seite des zweiten Ritzels 52 schließt die Außenverzahnung 65 in axialer Richtung gesehen bündig mit der Einheit bestehend aus Ritzel 52 und Kupplungsring 57 ab.

Die Ausführungsbeispiele der Figuren haben gemeinsam, dass neben dem zweiten Ritzel 52, das mit dem Ringrad 2 kämmt, nur ein weiteres Zahnrad (Zusatzzahnrad 51), das mit nur einem anderen Zahnrad (hier Losrad 31) in kämmenden Eingriff steht. Somit kann die Zusatzwelle 50 genau einem Gang des Schaltgetriebes zugeordnet werden, nämlich hier dem Rückwärtsgang R.

Bezüglich der rotierenden Massen bzw. des Trägheitsmoments des Schwingungssystems, das (bei nicht eingelegtem Rückwärtsgang) durch eine Anregung über das Ringrad 2 Rasselgeräusche verursachen könnte, dürften die Ausführungsbeispiele gemäß der Figuren 2 und 3 gleichwertig sein. In beiden Fällen besteht das Schwingungssystem aus einem baugleichen Ritzel oder Zahnrad mit einem daran angeschweißten Kupplungsring. Ein Unterschied besteht darin, dass bei Figur 2 der Kupplungsring 57 rechts (also motorseitig) und bei Figur 3 der Kupplungsring 57 links (von der Motorseite 1 abgewandt) an dem Ritzel 52 befestigt ist.

Bei einer Anregung über das Losrad 31 umfasst das zu Grunde zu legende Schwingungssystem hingegen die Zusatzwelle 50 mit dem Zusatzrad 51, die Nabe 56 sowie die Schiebemuffe 54 (siehe Figur 2). Es hat sich aber gezeigt, dass bei Gesamtbetrachtung des Schaltgetriebes hinsichtlich Rasseln sich durch die Erfindung Vorteile ergeben, gleichwohl nun das Trägheitsmoment der Schiebemuffe zum Trägheitsmoment des Schwingungssystems beiträgt, dass bei Anregung durch das Losrad 31 (bei eingelegtem 1 Vorwärtsgang) zu Grunde zu legen ist.

### Bezugszeichenliste

- 1: Antriebs- oder Motorseite
- 2: Ringrad
- 3: gestrichelte Linie (kämmender Eingriff)
- 4: gestrichelte Linie (kämmender Eingriff)

- 10: Eingangswelle
- 11: Festrad
- 12: Festrad
- 13: Festrad
- 14: Festrad
- 15: Festrad
- 16: Festrad

- 30: Ausgangswelle
- 31: Losrad
- 32: Losrad
- 33: Losrad
- 34: Losrad
- 35: Losrad
- 36: Losrad
- 37: Gangschaltkupplung (Doppel-Gangschaltkupplung)
- 38: Schiebemuffe
- 39: erstes Ritzel
- 40: Gangschaltkupplung (Doppel-Gangschaltkupplung)
- 41: Gangschaltkupplung (Doppel-Gangschaltkupplung)

- 50: Zusatzwelle
- 51: Zusatzzahnrad
- 52: zweites Ritzel
- 53: Zusatzgangschaltkupplung (Einfach-Gangschaltkupplung)
- 54: Schiebemuffe
- 55: Nadellager
- 56: Nabe
- 57: Kupplungsring
- 58: Anlauffläche
- 59: Synchronring
- 60: Radialsteg
- 61: Außenverzahnung
- 62: Zahnfuß
- 63: axialer Vorsprung
- 64: Außenverzahnung
- 65: Außenverzahnung

## Patentansprüche

1. Schaltgetriebe für ein Kraftfahrzeug, umfassend:
- eine Eingangswelle (10) und eine Ausgangswelle (30),
- Festräder (11 bis 16), Losräder (31 bis 36) sowie Gangschaltkupplungen (37, 40, 41) zur drehfesten Verbindung der Losräder (31 bis 36) mit der Eingangswelle (10) oder der Ausgangswelle (30),
- mehrere Gänge (I bis VI), wobei jedem Gang eines der Losräder (31 bis 36) und eine der Gangschaltkupplungen (37, 40, 41) zugeordnet sind, wobei das Losrad durch die Gangschaltkupplung drehfest mit der das Losrad tragenden Welle verbunden ist, wenn der entsprechende Gang eingelegt ist,
- ein Ringrad (2), das mit einem ersten Ritzel (39) kämmt, das auf der Ausgangswelle (30) angeordnet ist,
- eine Zusatzwelle (50), auf der ein zweites Ritzel (52), das mit dem Ringrad (2) kämmt, sowie ein Zusatzzahnrad (51) und eine Zusatz-Gangschaltkupplung (53) angeordnet ist,
wobei die Zusatzwelle (50) und die Zusatz-Gangschaltkupplung (53) einem Zusatzgang zugeordnet sind, wobei das zweite Ritzel (52) bei nicht eingelegtem Zusatzgang drehbar auf der Zusatzwelle (50) angeordnet ist und bei eingelegtem Zusatzgang mit der Zusatzwelle drehfest verbunden ist, wobei der Zusatzgang ein Rückwärtsgang (R) ist, wobei das Zusatzzahnrad (51) als Festrad drehfest auf der Zusatzwelle (50) sitzt und mit einem Losrad (31) auf der Ausgangswelle (30) kämmt, wobei eine Schiebemuffe (54) der Zusatz-Gangschaltkupplung bei nicht eingelegtem Zusatzgang zum zweiten Ritzel (52) verdrehbar ist und bei eingelegtem Zusatzgang mit dem zweiten Ritzel (52) drehfest verbunden ist
**dadurch gekennzeichnet, dass** das Losrad (31), mit dem das Zusatzzahnrad (51) kämmt, einem ersten Vorwärtsgang (I) oder einem zweiten Vorwärtsgang (II) des Schaltgetriebes zugeordnet ist.

2. Schaltgetriebe nach Anspruch 1, **dadurch gekennzeichnet, dass** die Schiebemuffe (54) an einer axialen Seite des zweiten Ritzels (52) und das Zusatzzahnrad (51) an einer gegenüber liegenden axialen Seite des zweiten Ritzels (52) angeordnet sind.

3. Schaltgetriebe nach Anspruch 1 oder 2, **dadurch gekennzeichnet, dass** zwischen der Zusatzwelle (50) und der Schiebemuffe (54) eine Nabe (56) vorgesehen ist.

4. Schaltgetriebe nach Anspruch 1, **dadurch gekennzeichnet, dass** die Schiebemuffe (54) an einem Radialsteg (60) des Zusatzzahnrads (51) angeordnet ist.

5. Schaltgetriebe nach einem der Ansprüche 1 bis 4, **dadurch gekennzeichnet, dass** eine drehbare Lagerung zwischen dem zweiten Ritzel (52) und der Schiebemuffe (54) der Zusatz-Gangschaltkupplung (53) ein Nadellager (55) umfasst, das zwischen dem Ritzel (52) und der Zusatzwelle (50) angeordnet ist.

6. Schaltgetriebe nach einem der Ansprüche 1 bis 5, **dadurch gekennzeichnet, dass** ein Kupplungsring (57) drehfest mit dem zweiten Ritzel (52) verbunden ist.

## Claims

1. Transmission for a motor vehicle, comprising:
- an input shaft (10) and an output shaft (30),
- fixed gears (11 to 16), idler gears (31 to 36) and gear couplings (37, 40, 41) for the rotationally fixed connection of the idler gears (31 to 36) to the input shaft (10) or the output shaft (30),
- a plurality of gears (I to VI), wherein one of the idler gears (31 to 36) and one of the gear couplings (37, 40, 41) is assigned to each gear, wherein the idler gear is connected in a rotationally fixed manner to the shaft bearing the idler gear by way of the gear coupling, when the corresponding gear is engaged,
- a ring gear (2) meshes with a first pinion (39), which is arranged on the output shaft (30),
- an additional shaft (50), on which a second pinion (52), that meshes with the ring gear (2), and an additional toothed gear (51) and an additional gear coupling (53) are arranged,
wherein the additional shaft (50) and the additional gear coupling (53) are assigned to an additional gear, wherein the second pinion (52) is rotatably arranged on the additional shaft (50) when the additional gear is not engaged and is connected to the additional shaft (50) in a rotationally fixed manner when the additional gear is engaged, wherein the additional gear is a reverse gear (R), wherein the additional toothed gear (51) is seated as a fixed wheel in a rotationally fixed manner on the additional shaft (50) and meshes with an idler gear (31) on the output shaft (30), wherein a sliding sleeve (54) of the additional gear coupling can be rotated towards the second pinion (52) when the additional gear is not engaged and is connected in a rotationally fixed manner to the second pinion (52) when the additional gear is engaged
**characterised in that** the idler gear (31), with which the additional toothed gear (51) meshes, is assigned to a first forward gear (I) or to a second forward gear (II) of the transmission.

2. Transmission according to claim 1, **characterised in that** the sliding sleeve (54) is arranged on an axial side of the second pinion (52) and the additional toothed gear (51) is arranged on an opposite axial side of the second pinion (52).

3. Transmission according to claim 1 or 2, **characterised in that** a hub (56) is provided between the additional shaft (50) and the sliding sleeve (54).

4. Transmission according to claim 1, **characterised in that** the sliding sleeve (54) is arranged on a radial web (60) of the additional toothed gear (51).

5. Transmission according to anyone of claims 1 to 4, **characterised in that** a rotatable bearing between the second pinion (52) and the sliding sleeve (54) of the additional gear coupling (53) comprises a needle gearing (55), which is arranged between the pinion (52) and the additional shaft (50).

6. Transmission according to any one of claims 1 to 5, **characterised in that** a coupling ring (57) is connected in a rotationally fixed manner to the second pinion (52).

## Revendications

1. Boîte de vitesses pour un véhicule automobile, comprenant :
- un arbre d'entrée (10) et un arbre de sortie (30),
- des roues fixes (11 à 16), des roues libres (31 à 36) ainsi que des embrayages (37, 40, 41) pour la liaison solidaire en rotation des roues libres (31 à 36) à l'arbre d'entrée (10) ou l'arbre de sortie (30),
- plusieurs vitesses (I à VI), dans laquelle une des roues libres (31 à 36) et un des embrayages (37, 40, 41) sont associés à chaque vitesse, dans laquelle la roue libre est reliée par l'embrayage solidaire en rotation à l'arbre portant la roue libre, lorsque la vitesse correspondante est enclenchée,
- une couronne (2), qui s'engrène avec un premier pignon (39), qui est agencé sur l'arbre de sortie (30),
- un arbre supplémentaire (50), sur lequel est agencé un deuxième pignon (52), qui s'engrène avec la couronne (2), ainsi qu'une roue dentée supplémentaire (51) et un embrayage supplémentaire (53),
dans laquelle l'arbre supplémentaire (50) et l'embrayage supplémentaire (53) sont associés à une vitesse supplémentaire, dans laquelle le deuxième pignon (52) est agencé en rotation sur l'arbre supplémentaire (50) lorsque la vitesse supplémentaire n'est pas enclenchée et est relié solidaire en rotation à l'arbre supplémentaire lorsque la vitesse supplémentaire est enclenchée, dans laquelle la vitesse supplémentaire est une marche arrière (R), dans laquelle la roue dentée supplémentaire (51) est située en tant que roue fixe solidaire en rotation sur l'arbre supplémentaire (50) et s'engrène avec une roue libre (31) sur l'arbre de sortie (30), dans laquelle un manchon coulissant (54) de l'embrayage supplémentaire est rotatif par rapport au deuxième pignon (52) lorsque la vitesse supplémentaire n'est pas enclenchée et est relié solidaire en rotation au deuxième pignon (52) lorsque la vitesse supplémentaire est enclenchée
**caractérisée en ce que** la roue libre (31), avec laquelle la roue dentée supplémentaire (51) s'engrène, est associée à une première marche avant (I) ou à une deuxième marche avant (II) de la boîte de vitesses.

2. Boîte de vitesses selon la revendication 1, **caractérisée en ce que** le manchon coulissant (54) est agencé au niveau d'un côté axial du deuxième pignon (52) et la roue dentée supplémentaire (51) est agencée au niveau d'un côté axial opposé du deuxième pignon (52).

3. Boîte de vitesses selon la revendication 1 ou 2, **caractérisée en ce qu'**un moyeu (56) est prévu entre l'arbre supplémentaire (50) et le manchon coulissant (54).

4. Boîte de vitesses selon la revendication 1, **caractérisée en ce que** le manchon coulissant (54) est agencé au niveau d'une nervure radiale (60) de la roue dentée supplémentaire (51).

5. Boîte de vitesses selon l'une quelconque des revendications 1 à 4, **caractérisée en ce qu'**un palier rotatif entre le deuxième pignon (52) et le manchon coulissant (54) de l'embrayage supplémentaire (53) comprend un roulement à aiguilles (55), qui est agencé entre le pignon (52) et l'arbre supplémentaire (50).

6. Boîte de vitesses selon l'une quelconque des revendications 1 à 5, **caractérisée en ce qu'**un anneau d'accouplement (57) est relié solidaire en rotation au deuxième pignon (52).
